# EUROPEAN PATENT APPLICATION

(11) **EP 4 092 781 A1**
(43) Date of publication of application: **23.11.2022**
(21) Application number: 21799840.0
(22) Date of filing: 03.05.2021
(51) Int. Cl.: H01M 4/13, H01M 4/62, H01M 10/42, H01M 4/139, H01M 4/04, H01M 10/0569, H01M 10/052, H01M 4/02

(54) **NEGATIVE ELECTRODE, METHOD FOR MANUFACTURING NEGATIVE ELECTRODE, SECONDARY BATTERY, AND METHOD FOR MANUFACTURING SECONDARY BATTERY**

(30) Priority: 08.05.2020 KR 20200055339
(71) Applicant: LG Energy Solution, Ltd., Seoul 07335 (KR)
(72) Inventor: RYU, Ji Hoon, Daejeon 34122 (KR); KIM, Ju Ri, Daejeon 34122 (KR); KIM, Hyun Min, Daejeon 34122 (KR)
(74) Representative: Hoffmann Eitle
(86) International application number: PCT/KR2021/005534
(87) International publication number: WO 2021/225339

(57) **Abstract**

The present invention relates to a negative electrode, a method for manufacturing the negative electrode, a secondary battery, and a method for manufacturing the secondary battery, wherein the negative electrode includes a first negative electrode active material layer and a second negative electrode active material layer, wherein the first negative electrode active material layer includes ethylene carbonate.

## Description

### TECHNICAL FIELD

### Cross-reference to Related Applications

This application claims the benefit of Korean Patent Application No. 10-2020-0055339, filed on May 8, 2020, in the Korean Intellectual Property Office, the disclosure of which is incorporated herein in its entirety by reference.

### Technical Field

The present invention relates to a negative electrode, a method for manufacturing the same, a secondary battery related to the same, and a method for manufacturing the secondary battery, wherein the negative electrode has a first negative electrode active material layer and a second negative electrode active material layer, and the first negative electrode active material layer close to a current collector includes ethylene carbonate.

### BACKGROUND ART

As technology development and demand for mobile devices have increased in recent years, the demand for secondary batteries as an energy source has been rapidly increased. Accordingly, various studies have been conducted on batteries which may meet various needs. Particularly, research has been actively conducted on a lithium secondary battery having high energy density and excellent lifespan and cycle properties as a power source for such devices.

A lithium secondary battery means a battery in which an electrolyte solution containing lithium ions is included in an electrode assembly including a positive electrode containing a positive electrode active material capable of intercalation/deintercalation of lithium ions, a negative electrode containing a negative electrode active material capable of intercalation/deintercalation of lithium ions, and a microporous separator interposed between the positive electrode and the negative electrode.

When the electrode assembly is formed, the electrode assembly is put into a case, and then the electrolyte solution is injected into the case to impregnate the electrode assembly in the electrolyte solution. At this time, the electrolyte solution wets the negative electrode, thereby serving to increase the mobility of lithium ions in the negative electrode.

However, when the loading amount of a negative electrode active material layer in the negative electrode is set to be high in order to increase the energy density of the negative electrode, it is difficult for the electrolyte solution to easily move into the negative electrode, so that the electrolyte solution wetting of the negative electrode is significantly lowered. When the electrolyte solution wetting is lowered, an SEI layer is not uniformly generated on the surface of the negative electrode, causing non-uniformity of performance in the negative electrode, so that the lifespan and stability of the secondary battery are deteriorated. In addition, low electrolyte solution wetting lowers the efficiency of a production process.

Typically, a negative electrode active material layer is formed into two layers in order to improve electrolyte solution wetting. However, with this method alone, there is a limitation in improving the electrolyte solution wetting of a negative electrode active material layer close to a current collector.

Therefore, in the present specification, a negative electrode capable of dramatically increasing electrolyte solution wetting, a method for manufacturing the negative electrode, a secondary battery, and a method for manufacturing the secondary battery will be described.

### DISCLOSURE OF THE INVENTION

### TECHNICAL PROBLEM

An aspect of the present invention provides a negative electrode capable of improving electrolyte solution wetting, and a method for manufacturing the same.

Another aspect of the present invention provides a secondary battery with improved electrolyte solution wetting, and a method for manufacturing the same.

### TECHNICAL SOLUTION

According to an embodiment of the present invention, there is provided a negative electrode including a current collector, and a negative electrode active material layer having a first negative electrode active material layer disposed on the negative electrode current collector and a second negative electrode active material layer disposed on the first negative electrode active material layer, wherein the first negative electrode active material layer includes ethylene carbonate.

According to another embodiment of the present invention, there is provided a method for manufacturing a negative electrode, the method including forming a first negative electrode active material layer on a negative electrode current collector through a first negative electrode slurry including ethylene carbonate, and forming a second negative electrode active material layer though a second negative electrode slurry, wherein the second negative electrode active material layer is disposed on the first negative electrode active material layer.

According to another embodiment of the present invention, there is provided a secondary battery including a negative electrode, a positive electrode, a separator, and an electrolyte solution, wherein the negative electrode includes a negative electrode current collector, a first negative electrode active material layer disposed on the negative electrode current collector, and a second negative electrode active material layer disposed on the first negative electrode active material layer, wherein the first negative electrode active material layer includes ethylene carbonate.

According to another embodiment of the present invention, there is provided a method for manufacturing a secondary battery, the method including manufacturing an electrode assembly having the negative electrode of the above embodiment, a positive electrode, and a separator, and impregnating the electrode assembly in an electrolyte solution.

### ADVANTAGEOUS EFFECTS

A negative electrode according to the present invention includes a first negative electrode active material layer and a second negative electrode active material layer, wherein the first negative electrode active material layer close to a current collector includes ethylene carbonate. Accordingly, when an electrolyte solution penetrates into the negative electrode in a secondary battery, the ethylene carbonate is changed into a liquid phase, and the ethylene carbonate changed into a liquid phase also changes adjacent ethylene carbonate around into a liquid phase. Due to the successive changes of the ethylene carbonate, a path of wetting which may allow the electrolyte solution to easily penetrate into the negative electrode may be formed, so that electrolyte solution wetting may be dramatically improved. In addition, the ethylene carbonate has high ion conductivity, so that the mobility of lithium ions in the negative electrode may be increased, and an SEI layer may be uniformly formed on the surface of the negative electrode.

### BRIEF DESCRIPTION OF THE DRAWINGS

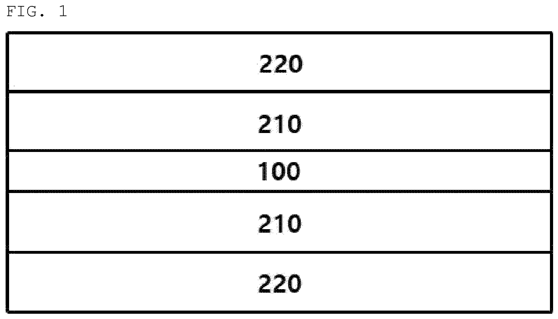

FIG. 1 is a schematic view of a negative electrode according to an embodiment of the present invention.

### MODE FOR CARRYING OUT THE INVENTION

It will be understood that words or terms used in the specification and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

The terminology used herein is for the purpose of describing particular exemplary embodiments only and is not intended to be limiting of the present invention. The terms of a singular form may include plural forms unless the context clearly indicates otherwise.

It will be further understood that the terms "include," "comprise," or "have" when used in this specification, specify the presence of stated features, numbers, steps, elements, or combinations thereof, but do not preclude the presence or addition of one or more other features, numbers, steps, elements, or combinations thereof.

In the present specification, "%" means wt% unless otherwise noted.

In the present specification, a "specific surface area" is measured by a BET method, and specifically, may be calculated from the adsorption amount of nitrogen gas under a liquid nitrogen temperature (77K) using Belsorp-mini II of BEL Japan Co., Ltd.

In the present specification, an average particle diameter (D₅₀) may be defined as a particle diameter corresponding to 50% of the volume accumulation in a particle diameter distribution curve of a particle. The average particle diameter (D₅₀) may be measured by, for example, a laser diffraction method. The laser diffraction method generally enables measurement of a particle diameter from a sub-micron region to several millimeters, so that results of high reproducibility and high resolution may be obtained.

In the present specification, porosity may be identified by the following method. A manufactured secondary battery is decomposed, dissembled, and then ion-milling is applied to a negative electrode to identify the cross-sectional thickness of each of a first negative electrode active material layer and a second negative electrode active material layer with an SEM, and the bulk volume of each of the first negative electrode active material layer and the second negative electrode active material layer are derived from the thickness. Thereafter, the second negative electrode active material layer is scraped off and removed to measure the weight of the first negative electrode active material layer and the weight of the second negative electrode active material layer, and then the loading amount (mass/area) of each thereof are calculated. Thereafter, the weight of each layer is divided by the negative electrode active material density of each layer to obtain a true volume. Thereafter, the porosity of each layer is calculated through [(Bulk volume - true volume) / Bulk volume]×100.

Hereinafter, the present invention will be described in detail.

### 1. Negative electrode

A negative electrode according to an embodiment of the present invention includes a negative electrode current collector, and a negative electrode active material layer having a first negative electrode active material layer disposed on the negative electrode current collector and a second negative electrode active material layer disposed on the first negative electrode active material layer, wherein the first negative electrode active material layer may include ethylene carbonate.

The negative electrode current collector is not particularly limited as long as it has conductivity without causing a chemical change in the battery. For example, as the negative electrode current collector, copper, stainless steel, aluminum, nickel, titanium, fired carbon, or aluminum or stainless steel that is surface-treated with one of carbon, nickel, titanium, silver, and the like may be used. Specifically, a transition metal which well adsorbs carbon such as copper and nickel may be used as the negative electrode current collector.

The negative electrode may include a negative electrode active material layer. The negative electrode active material layer may be disposed on one surface or on both surfaces of the negative electrode current collector. The loading amount of the negative electrode active material layer may be 50 mg/25 m² to 600 mg/25 m², specifically 400 mg/25 cm² to 600 mg/25 cm². The above loading amount is higher than the loading amount of a typical negative electrode active material layer.

Referring to FIG. 1, the negative electrode active material layer may include a first negative electrode active material layer 210 and a second negative electrode active material layer 220. The first negative electrode active material layer 210 may be disposed on a negative electrode current collector 100, and specifically, may be in contact with the negative electrode current collector 100. The second negative electrode active material layer 220 may be disposed on the first negative electrode active material layer 210, and the first negative electrode active material layer 210 may be disposed between the second negative electrode active material layer 2 2 0 and the negative electrode current collector 100. Since the first negative electrode active material layer 210 and the second negative electrode active material layer 220 are formed through a respectively prepared slurry, there may be a boundary surface between the first negative electrode active material layer 210 and the second negative electrode active material layer 220.

Each of the first negative electrode active material layer and the second negative electrode active material layer may include a negative electrode active material. The negative electrode active material may be a negative electrode active material commonly used in the art, and the type thereof is not particularly limited. The negative electrode active material of the first negative electrode active material layer and the negative electrode active material of the second negative electrode active material layer may be the same, or different.

The negative electrode active material may be at least one of a carbon-based active material and a silicon-based active material. As the carbon-based active material particle, one or more selected from the groups consisting of artificial graphite, natural graphite, a graphitized carbon fiber, and a graphitized mesocarbon microbead may be used. Particularly, when artificial graphite is used, it is possible to improve rate properties. As the silicon-based active material, one or more selected from the group consisting of SiO_{X}(0≤_{X}<2), an Si-C composite, and an Si-Y alloy (wherein Y is an element selected from the group consisting of an alkali metal, an alkaline earth metal, a transition metal, a Group 13 element, a Group 14 element, a rare earth element, and a combination thereof) may be used.

Each of the first negative electrode active material layer and the second negative electrode active material layer may further include a binder. The binder of the first negative electrode active material layer and the binder of the second negative electrode active material layer may be the same, or different. The binder is to ensure the adhesion force between the negative electrode active materials or between the negative electrode active material and the current collector. Any binder commonly used in the art may be used, and the type thereof is not particularly limited.

The binder may be, for example, polyvinylidene fluoride, a polyvinylidene fluoride-hexafluoropropylene copolymer (PVDF-co-HFP), polyvinyl alcohol, polyacrylonitrile, starch, hydroxypropyl cellulose, regenerated cellulose, polyvinylpyrrolidone, polytetrafluoroethylene, polyethylene, polypropylene, an ethylene-propylene-diene polymer(EPDM), a sulfonated-EPDM, carboxymethyl cellulose (CMC), styrenebutadiene rubber (SBR), fluorine rubber, or various copolymers thereof, and the like, and any one thereof or a mixture of two or more thereof may be used.

Each of the first negative electrode active material layer and the second negative electrode active material layer may further include a conductive material. The conductive material may be a conductive material commonly used in the art, and the type thereof is not particularly limited. The conductive material of the first negative electrode active material layer and the conductive material of the second negative electrode active material layer may be the same, or different.

The conductive material is not particularly limited as long as it has conductivity without causing a chemical change in the battery. For example, graphite such as natural graphite or artificial graphite; carbon black such as acetylene black, Ketjen black, channel black, furnace black, lamp black, and thermal black; conductive fiber such as carbon fiber and metal fiber; a conductive tube such as a carbon nanotube; fluorocarbon powder; metal powder such as aluminum powder, and nickel powder; a conductive whisker such as a zinc oxide and potassium titanate; a conductive metal oxide such as a titanium oxide; a conductive material such as a polyphenylene derivative, and the like may be used.

The loading amount of the first negative electrode active material layer may be 50 mg/25 cm² to 400 mg/25 cm², specifically 100 mg/25 cm² to 300 mg/25 cm², more specifically 150 mg/25 cm² to 250 mg/25 cm². The above loading amount is similar to the loading amount of a typical negative electrode active material, and when the second negative electrode active material layer is added, a negative electrode active material layer with a higher loading amount than the typical negative electrode active material layer is formed. In the present invention, since the first negative electrode active material layer includes ethylene carbonate, the electrolyte solution wetting degradation problem is solved, so that the loading amount of the entire negative electrode active material may be high.

The first negative electrode active material layer may include ethylene carbonate. The ethylene carbonate is in a solid phase at room temperature, so that it is advantageous to include the same in the first negative electrode active material layer. In addition, the ethylene carbonate in a solid phase is changed into a liquid phase when the negative electrode is impregnated in the electrolyte solution. The liquid-phase ethylene carbonate serves as a path of wetting of the electrolyte solution, and forms pores in the first negative electrode active material layer, thereby dramatically improving the electrolyte solution wetting of the negative electrode. In addition, the ethylene carbonate has high ion conductivity, so that the mobility of lithium ions in the negative electrode may be increased, and an SEI layer may be uniformly formed on the surface of the negative electrode. This leads to an improvement in the lifespan and stability of a secondary battery.

The ethylene carbonate may be included in the first negative electrode active material layer in an amount of 0.5 wt% to 15 wt%, specifically 2 wt% to 10 wt%, more specifically 3 wt% to 6 wt%. When the above range is satisfied, the effect of improving electrolyte solution wetting may be maximized.

The second negative electrode active material layer may not include ethylene carbonate. In that case, the ratio of the negative electrode active material in the second negative electrode active material layer may be increased, and the thickness of the second negative electrode active material layer may be reduced, so that energy density may be improved.

### 2. Method for manufacturing negative electrode

A method for manufacturing a negative electrode according to another embodiment of the present invention includes forming a first negative electrode active material layer on a negative electrode current collector through a first negative electrode slurry including ethylene carbonate, and forming a second negative electrode active material layer though a second negative electrode slurry, wherein the second negative electrode active material layer may be disposed on the first negative electrode active material layer. A negative electrode manufactured accordingly may be the same as the negative electrode of the above-described negative electrode. The ethylene carbonate, the negative electrode current collector, the first negative electrode active material layer, and the second negative electrode active material layer are the same as the ethylene carbonate, the negative electrode current collector, the first negative electrode active material layer, and the second negative electrode active material layer described in the embodiment described above with reference to a negative electrode, and thus, descriptions thereof will be omitted.

Each of the first negative electrode slurry and the second negative electrode slurry may include a negative electrode active material and a solvent. In addition, each of the first negative electrode slurry and the second negative electrode slurry may further include a binder and a conductive material. The negative electrode active material, the binder, and the conductive material are the same as the negative electrode active material, the binder, and the conductive material described in the above-described embodiment, and thus, descriptions thereof will be omitted.

The solvent may be, for example, water; an amide-based polar organic solvent such as dimethylformamide (DMF), diethylformamide, dimethylacetamide (DMAc), and N-methylpyrrolidone (NMP); an alcohol such as methanol, ethanol, 1-propanol, 2-propanol (isopropyl alcohol), 1-butanol (n-butanol), 2-methyl-1-propanol (isobutanol), 2-butanol (sec-butanol), 1-methyl-2-propanol (tert-butanol), pentanol, hexanol, heptanol, and octanol; a glycol such as ethylene glycol, diethylene glycol, triethylene glycol, propylene glycol, 1,3-propanediol, 1,3-butanediol, 1,5-pentanediol, and hexylene glycol; a polyhydric alcohol such as glycerin, trimethylol propane, pentaerythritol, and sorbitol; a glycol ether such as ethylene glycol monomethyl ether, diethylene glycol monomethyl ether, triethylene glycol monomethyl ether, tetraethylene glycol monomethyl ether, ethylene glycol monoethyl ether, diethylene glycol monoethyl ether, triethylene glycol monoethyl ether, tetraethylene glycol monoethyl ether, ethylene glycol monobutyl ether, diethylene glycol monobutyl ether, triethylene glycol monobutyl ether, and tetraethylene glycol monobutyl ether; a ketone such acetone, methyl ethyl ketone, methyl propyl ketone, and cyclopentanone; and an ester such as ethyl acetate, γ-butyl lactone, and ε-propiolactone . Any one thereof and a mixture of two or more thereof may be used.

The first negative electrode slurry may include ethylene carbonate. The first negative electrode slurry may be formed by mixing and stirring a negative electrode active material and ethylene carbonate in a solvent. In some cases, a binder and/or a conductive material may be additionally mixed and stirred in addition to the negative electrode active material and the ethylene carbonate. Meanwhile, the second negative electrode slurry may not include ethylene carbonate. Specifically, the second negative electrode slurry may be formed by mixing and stirring the negative electrode active material in a solvent. In some cases, a binder and/or a conductive material may be additionally mixed and stirred in addition to the negative electrode active material.

When preparing the first negative electrode slurry, ethylene carbonate is included, and the ethylene carbonate may be in a solid phase. Since ethylene carbonate is included in a solid phase, not in a liquid phase, in the first negative electrode slurry, a process may be simplified. Specifically, when the ethylene carbonate is in a liquid phase, it is difficult to weigh the ethylene carbonate and to prepare a slurry. Therefore, it is preferable to use ethylene carbonate present in a solid phase when preparing the slurry.

The ethylene carbonate may be included in a solid of the first negative electrode slurry in an amount of 0.5 wt% to 15 wt%, specifically 2 wt% to 10 wt%, more specifically 3 wt% to 6 wt%. When the above range is satisfied, the effect of improving electrolyte solution wetting may be maximized.

The first negative electrode active material layer and the second negative electrode active material layer may be manufactured by the following method, but are not limited thereto.

As a first method, the first negative electrode slurry may be applied on the negative electrode current collector and dried to form the first negative electrode active material layer, and then the second negative electrode slurry may be applied on the first negative electrode active material layer and dried to form the second negative electrode active material layer. A roll-pressing process may be performed immediately after the first negative electrode slurry is dried and immediately after the second negative electrode slurry is dried, or may be performed only after the second negative electrode slurry is dried.

As a second method, the first negative electrode slurry and the second negative electrode slurry may be sequentially applied on the negative electrode current collector, dried, and then roll-pressed to form the first negative electrode active material layer and the second negative electrode active material layer.

### 3. Secondary battery

A secondary battery according to another embodiment of the present invention includes a negative electrode and an electrolyte solution, wherein the negative electrode may include a negative electrode current collector, a first negative electrode active material layer disposed on the negative electrode current collector, and a second negative electrode active material layer disposed on the first negative electrode active material layer, wherein the first negative electrode active material layer may include ethylene carbonate. The negative electrode current collector and the second negative electrode active material layer are the same as the negative electrode current collector and the second negative electrode active material layer of the embodiment described above with reference to a negative electrode, and thus, descriptions thereof will be omitted.

Like the negative electrode of the above-described embodiment, the negative electrode includes a negative electrode current collector, a first negative electrode active material layer, and a second negative electrode active material layer. However, unlike the negative electrode of the above-described embodiment, there is a difference in that the ethylene carbonate included in the first negative electrode active material layer is in a liquid phase.

Before the negative electrode is impregnated in the electrolyte solution, ethylene carbonate included in the negative electrode is in a solid phase. When the negative electrode is impregnated in the electrolyte solution when manufacturing the secondary battery, the ethylene carbonate is dissolved by the electrolyte solution and becomes to be in a liquid phase. The ethylene carbonate in a liquid phase dissolves adjacent ethylene carbonate in a solid phase, and such a reaction occurs successively. Eventually, ethylene carbonate included in a negative electrode inside the manufactured secondary battery is present in a liquid phase. Accordingly, the liquid-phase ethylene carbonate serves as a path of wetting of the electrolyte solution, and forms pores in the first negative electrode active material layer, thereby dramatically improving the electrolyte solution wetting of the negative electrode. In addition, the ethylene carbonate has high ion conductivity, so that the mobility of lithium ions in the negative electrode may be increased, and an SEI layer may be uniformly formed on the surface of the negative electrode. This leads to an improvement in the lifespan and stability of a secondary battery.

The first negative electrode active material layer and the second negative electrode active material layer both include pores. The porosity of the first negative electrode active material layer may be greater than the porosity of the second negative electrode active material layer by 1% to 5%, specifically 2% to 3%. The pore may include an electrolyte solution or the liquid-phase ethylene carbonate inside therein. When forming the first negative electrode active material, ethylene carbonate in a solid phase is present, and due to a large number of pore in the first negative electrode active material layer which are generated when the ethylene carbonate is changed into a liquid phase, there may be a difference in porosity.

The positive electrode may include a positive electrode active material. The positive electrode active material may be a positive electrode active material commonly used in the art. Specifically, the positive electrode active material may be a layered compound such as a lithium cobalt oxide (LiCoO₂) and a lithium nickel oxide (LiNiO₂), or a compound substituted by one or more transition metals; a lithium iron oxide such as LiFe₃O₄; a lithium manganese oxide represented by Formula Li_{1+c1}Mn_{2-c1}O₄ (0≤c1≤0.33), LiMnO₃, LiMn₂O₃, or LiMnO₂; a lithium copper oxide (Li₂CuO₂); a vanadium oxide such as LiV₃O₈, V₂O₅, and Cu₂V₂O₇; a Ni-site type lithium nickel oxide represented by Formula LiNi_{1-c2}M_{c2}O₂ (wherein M is at least one selected from the group consisting of Co, Mn, Al, Cu, Fe, Mg, B, and Ga, and 0.01≤y2≤0.3); a lithium manganese complex oxide represented by Formula LiMn_{2-c3}M_{c3}O₂ (wherein M is at least one selected from the group consisting of Co, Ni, Fe, Cr, Zn, and Ta, 0.01≤c3≤0.1) or Formula Li₂Mn₃MO₈ (wherein M is at least one selected from the group consisting of Fe, Co, Ni, Cu, Zn); LiMn₂O₄ in which a part of Li in the formula is substituted with an alkaline earth metal ion, and the like, but is not limited thereto. The positive electrode may be a Li-metal.

A separator is to separate the negative electrode and the positive electrode and to provide a movement path for lithium ions. Any separator may be used without particular limitation as long as it is typically used as a separator in a lithium secondary battery. Particularly, a separator having high moisture-retention ability for an electrolyte solution as well as low resistance to the movement of electrolyte ions is preferable. Specifically, a porous polymer film, for example, a porous polymer film manufactured using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous non-woven fabric, for example, a non-woven fabric formed of glass fiber having a high melting point, polyethylene terephthalate fiber, or the like may be used. Also, a coated separator including a ceramic component or a polymer material may be used to secure heat resistance or mechanical strength, and may be selectively used in a single-layered or a multi-layered structure.

The electrolyte solution may include a non-aqueous organic solvent and a lithium salt.

As the non-aqueous organic solvent, for example, an aprotic organic solvent, such as N-methyl-2-pyrrolidone, propylene carbonate, ethylene carbonate, butylene carbonate, dimethyl carbonate, diethyl carbonate, γ-butyrolactone, 1,2-dimethoxy ethane, tetrahydrofuran, 2-methyl tetrahydrofuran, dimethyl sulfoxide, 1,3-dioxolane, formamide, dimethylformamide , dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate may be used.

Particularly, among the carbonate-based organic solvents, a cyclic carbonate such as ethylene carbonate and propylene carbonate may preferably be used since it is an organic solvent of high viscosity and has high dielectric constant to dissociate a lithium salt well. When such a cyclic carbonate is mixed with a linear carbonate of low viscosity and low dielectric constant such as dimethyl carbonate and diethyl carbonate in an appropriate ratio, an electrolyte having a high electric conductivity is prepared, therefore such a combined use is more preferable.

More preferably, the organic solvent may include ethylene carbonate. When the electrolyte solution includes ethylene carbonate, a phenomenon in which ethylene carbonate present in the first negative electrode active material layer is excessively diffused into the electrolyte solution due to concentration difference may be suppressed, which may increase the residual amount of the ethylene carbonate in the first negative electrode active material layer, so that the above-described effects may be further improved.

As the metal salt, a lithium salt may be used. The lithium salt is a material which is easily dissolved in the non-aqueous electrolyte solution. For example, as an anion of the lithium salt, one or more selected from the group consisting of F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻ may be used.

In the electrolyte solution, in order to improve the lifespan properties of a battery, to suppress the decrease in battery capacity, and to improve the discharge capacity of the battery, one or more additives, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, and the like may be further included other than the above electrolyte solution components.

### 4. Method for manufacturing secondary battery

A method for manufacturing a secondary battery according to another embodiment of the present invention may include manufacturing an electrode assembly having a negative electrode, a positive electrode, and a separator, and impregnating the electrode assembly in an electrolyte solution. The negative electrode is the same as the negative electrode of the embodiment described above with reference to a negative electrode. In addition, the positive electrode, the separator, and the electrolyte solution are the same as the positive electrode, the separator and the electrolyte sol ution of the embodiment described above with reference to a secondary battery, and thus, descriptions thereof will be omitted.

In the electrode assembly, the separator is disposed between the negative electrode and the positive electrode and serves to electrically disconnect the negative electrode and the positive electrode. Even when the negative electrode and the positive electrode are provided in plurality, the negative electrodes and the positive electrodes are alternately stacked with the separator interposed therebetween and are insulated from each other.

When the electrode assembly is manufactured, the electrode assembly is put into a case, and then the electrolyte solution is injected to impregnate the electrode assembly in the electrolyte solution. As a result, ethylene carbonate in a solid phase included in the negative electrode is changed into a liquid phase. The ethylene carbonate in a liquid phase and pores formed when the ethylene carbonate in a solid phase is changed into a liquid phase allow the electrolyte solution to more easily penetrate into the negative electrode.

The electrolyte solution is the same as the electrolyte solution of the embodiment described above. Specifically, the electrolyte solution includes an organic solvent, and the organic solvent may include ethylene carbonate.

According to yet another embodiment of the present invention, a battery module including the secondary battery as a unit cell, and a battery pack including the same are provided. The battery module and the battery pack include the secondary battery which has high capacity, high rate properties, and cycle properties, and thus, may be used as a power source of a medium-and-large sized device selected from the group consisting of an electric vehicle , a hybrid electric vehicle, a plug-in hybrid electric vehicle, and a power storage system.

Hereinafter, the present invention will be described in more detail with reference to specific embodiments.

### Examples and Comparative Examples

### Example 1. Manufacturing of negative electrode and secondary battery

### (1) Manufacturing of negative electrode

Artificial graphite as a negative electrode active material, carboxymethyl cellulose (CMC) and styrene butadiene rubber (SBR) as a binder, Super P as a conductive material, and ethylene carbonate of a solid phase were mixed and stirred in water as a solvent to manufacture a first negative electrode slurry. In the first negative electrode slurry, the weight ratio of the negative electrode active material, the binder, the conductive material, and the ethylene carbonate was 91:4:1:4.

Meanwhile, artificial graphite as a negative electrode active material, CMC and SBR as a binder, and Super P as a conductive material were mixed and stirred in water as a solvent to manufacture a second negative electrode slurry. In the second negative electrode slurry, the weight ratio of the negative electrode active material, the binder, and the conductive material was 95:4:1.

The first negative electrode slurry was applied on both surfaces of a copper current collector having a thickness of 8 pm and dried. At this time, the temperature of circulated air was 80°C to 110°C. Thereafter, the second negative electrode slurry was applied on the first negative electrode slurry and dried. At this time, the temperature of circulated air was 80°C to 110°C.

Thereafter, the copper current collector on which the first negative electrode slurry and the second negative electrode slurry were present in a dried state was roll-pressed and then dried for 24 hours in a vacuum oven at 60°C to manufacture a negative electrode.

In the negative electrode, the loading amount of the first negative electrode active material layer was 200 mg/25 cm², and the ethylene carbonate was included in the first negative electrode active material layer in 4 wt%. The loading amount of the second negative electrode active material layer was about 250 mg/25 cm² to 300 mg/25 cm², and thus, the loading amount of the entire negative electrode active material layer was 450 mg/25 cm² to 500 mg/25 cm².

### (2) Manufacturing of secondary battery

Li[Ni_{0.8}Co_{0.1}Mn_{0.1}]O₂, carbon black, and PVDF were mixed in a non-aqueous solvent to prepare a positive electrode slurry, and then the positive electrode slurry was applied on both surfaces of a current collector, dried, and then roll-pressed to manufacture a positive electrode including a positive electrode active material layer. In the positive electrode active material layer, Li[Ni_{0.8}Co_{0.1}Mn_{0.1}]O₂ was included in 95 wt%, carbon black (conductive material) in 2.5 wt%, and PVDF in 2.5 wt%.

As a separator, a porous polyethylene including a PVDF coating layer was used.

The positive electrode was positioned on one surface of the separator, and the negative electrode was positioned on the other surface thereof, and then laminated to manufacture an electrode assembly. At this time, the electrode assembly was roll-laminated under the condition of 80°C and 5 kgf/cm.

An electrolyte solution was prepared by dissolving lithium hexafluorophosphate (LiPF₆) having a concentration of 1.0 M in an organic solvent in which ethylene carbonate and ethyl methyl carbonate were mixed at a volume ratio of 3:7.

The manufactured electrode assembly was received in a pouch-type battery case, and the electrolyte solution was injected thereto to manufacture a secondary battery.

In the secondary battery, the porosity of the first negative electrode active material layer was 30%, and the porosity of the second negative electrode active material layer was 28%. In addition, the ethylene carbonate was present in a liquid phase in the negative electrode.

### Example 2: Manufacturing negative electrode and secondary battery

A negative electrode and a secondary battery were manufactured in the same manner as in Example 1 except that the content of ethylene carbonate introduced to the first negative electrode slurry was adjusted such that the ethylene carbonate was included in 6 wt% in the first negative electrode active material layer.

### Example 3: Manufacturing negative electrode and secondary battery

A negative electrode and a secondary battery were manufactured in the same manner as in Example 1 except that the content of ethylene carbonate introduced to the first negative electrode slurry was adjusted such that the ethylene carbonate was included in 2 wt% in the first negative electrode active material layer.

### Comparative Example 1: Manufacturing of negative electrode and secondary battery

A negative electrode and a secondary battery were manufactured in the same manner as in Example 1 except that ethylene carbonate was not introduced when preparing a first negative electrode slurry.

### Experimental Example 1: Evaluation of lifespan properties (capacity retention rate) and resistance of secondary battery

For the secondary battery of each of Examples and Comparative Examples, a charging range of SOC 0% to SOC 95% (2.5 V to 4.2 V) was set, and then charging and discharging were performed at a current speed of 0.2 C for the first cycle to measure the discharge capacity of the battery. For the second cycle, charging was performed to SOC 50% at a current speed of 0.5 C, and then discharging was performed with 2.5 C for 10 seconds. From the third to the hundredth cycle, charging and discharging were performed at a current speed of 0.5 C, and then the capacity retention rate of the battery was identified. Capacity retention rate was evaluated from the discharge capacity of the hundredth cycle, based on the third cycle discharge capacity of 100%. The results are shown in Table 1. In addition, resistance was calculated (DCIR measurement method) by dividing a voltage decrease occurring after the hundredth cycle by an applied current, and the results are shown in Table 1.

Capacity retention rate = (Discharge capacity after the hundredth cycle / Discharge capacity after the third cycle) × 100

**[Table 1]**

| | Capacity retention rate (%) | Resistance (Ω) |
|---|---|---|
| Example 1 | 93.7 | 5.2 |
| Example 2 | 93.4 | 4.9 |
| Example 3 | 92.4 | 6.5 |
| Comparative Example 1 | 89.1 | 8.9 |

### Reference Numeral

- 100:: current collector
- 210:: first negative electrode active material layer
- 220:: second negative electrode active material layer

## Claims

1. A negative electrode comprising:
a negative electrode current collector; and
a negative electrode active material layer including a first negative electrode active material layer disposed on the negative electrode current collector and a second negative electrode active material layer disposed on the first negative electrode active material layer,
wherein the first negative electrode active material layer includes ethylene carbonate.

2. The negative electrode of claim 1, wherein the ethylene carbonate is included in the first negative electrode active material layer in an amount of 0.5 wt% to 15 wt%.

3. The negative electrode of claim 1, wherein the ethylene carbonate is included in the first negative electrode active material layer in an amount of 3 wt% to 6 wt%.

4. The negative electrode of claim 1, wherein the loading amount of the first negative electrode active material layer is 50 mg/25 m² to 400 mg/25m².

5. The negative electrode of claim 1, wherein the loading amount of the negative electrode active material layer is 50 mg/25 m² to 600 mg/25 m².

6. A method for manufacturing a negative electrode, the method comprising:
forming a first negative electrode active material layer on a negative electrode current collector through a first negative electrode slurry including ethylene carbonate; and
forming a second negative electrode active material layer though a second negative electrode slurry,
wherein the second negative electrode active material layer is disposed on the first negative electrode active material layer.

7. The method of claim 6, wherein the ethylene carbonate is included in a solid of the first negative electrode slurry in an amount of 0.5 wt% to 15 wt%.

8. The method of claim 6, wherein the ethylene carbonate is in a solid phase.

9. A secondary battery comprising:
a negative electrode; a positive electrode; a separator; and an electrolyte solution,
wherein the negative electrode includes:
a negative electrode current collector;
a first negative electrode active material layer disposed on the negative electrode current collector; and
a second negative electrode active material layer disposed on the first negative electrode active material layer,
wherein the first negative electrode active material layer includes ethylene carbonate.

10. The secondary battery of claim 9, wherein the first negative electrode active material layer includes pores, and the porosity of the first negative electrode active material layer is greater than the porosity of the second negative electrode active material layer by 1% to 5%.

11. The secondary battery of claim 9, wherein the ethylene carbonate is in a liquid phase.

12. The secondary battery of claim 9, wherein the electrolyte solution includes an organic solvent, and the organic solvent includes ethylene carbonate.

13. A method for manufacturing a secondary battery, the method comprising:
manufacturing an electrode assembly including the negative electrode of claim 1, a positive electrode, and a separator; and
impregnating the electrode assembly in an electrolyte solution.

14. The method of claim 13, wherein the electrolyte solution includes an organic solvent, and the organic solvent includes ethylene carbonate.
